# EUROPÄISCHE PATENTANMELDUNG

(11) **EP 4 394 241 A1**
(43) Veröffentlichungstag der Anmeldung: **03.07.2024**
(21) Anmeldenummer: 22216976.5
(22) Anmeldetag: 28.12.2022
(51) Int. Cl.: F21S 41/63, F21S 41/153, F21S 41/663

(54) **VERFAHREN ZUR AUFLÖSUNGSOPTIMIERTEN ANSTEUERUNG EINES KRAFTFAHRZEUGLEUCHTMODULS**

(71) Anmelder: ZKW Group GmbH, 3250 Wieselburg (AT)
(72) Erfinder: Miedler, Stefan, 3105 Unterradlberg (AT); Aigner, Clemens, 3100 St. Pölten (AT); Haas, Erik, 3203 Rabenstein an der Pielach (AT)
(74) Vertreter: Patentanwaltskanzlei Matschnig & Forsthuber OG

(57) **Zusammenfassung**

Die Erfindung betrifft ein Verfahren zur auflösungsoptimierten Ansteuerung eines Kraftfahrzeugleuchtmoduls (1), wobei das Kraftfahrzeugleuchtmodul (1) zur Abstrahlung einer segmentierten Lichtverteilung eingerichtet ist, wobei das Kraftfahrzeugleuchtmodul (1) eine Ablenkeinheit (2) umfasst, mit der eine native Auflösung An des Kraftfahrzeugleuchtmoduls (1) durch zumindest zeitweise Strahlablenkung mittels der Ablenkeinheit (2) visuell erhöht werden kann, wobei das Verfahren die folgenden Schritte umfasst:
a) Empfangen eines Bildsignals (S1), wobei das Bildsignal (S1) ein Sollbild (Ssoll) einer Lichtverteilung enthält,
b) Umwandeln des gemäß Schritt a) empfangenen Sollbildes (Ssoll) in zwei niedriger aufgelöste Bilder (S_low1, S_low2),
c) Ansteuerung des Kraftfahrzeugleuchtmoduls, wobei die Ansteuerung dergestalt erfolgt, dass die beiden niedrig aufgelösten Bilder (S_low1, S_low2) des Bildpaars (S_res) zeitlich nacheinander durch das Kraftfahrzeugleuchtmodul (1) abgestrahlt werden.

## Beschreibung

Die Erfindung betrifft ein Verfahren zur auflösungsoptimierten Ansteuerung eines Kraftfahrzeugleuchtmoduls, wobei das Kraftfahrzeugleuchtmodul zur Abstrahlung einer segmentierten Lichtverteilung eingerichtet ist.

Aus dem Stand der Technik sind Verfahren zur Ansteuerung von Kraftfahrzeugleuchtmodulen bekannt geworden, die eine zeitlich variable Veränderung der Lichtabstrahlung einzelner Segmente einer Lichtverteilung ermöglichen. Üblicherweise ist die Auflösung dabei durch die Auflösung des betreffenden Kraftfahrzeugleuchtmoduls beschränkt.

Zur Verbesserung der Lichtabstrahlung wurden bisher die Komponenten des betreffenden Kraftfahrzeugleuchtmoduls verändert, beispielsweise, indem Komponenten eingesetzt werden, die eine höhere Auflösung, verbesserten Kontrast, erhöhte Lichtintensitäten usw. ermöglichen.

Eine Aufgabe der Erfindung besteht darin, ein Verfahren zu liefern, mit dem die Lichtabstrahlung eines Kraftfahrzeugleuchtmoduls zur Abstrahlung einer segmentierten Lichtverteilung weiter verbessert werden kann.

Diese Aufgabe wird mit einem Verfahren der eingangs genannten Art gelöst, indem das Kraftfahrzeugleuchtmodul eine Ablenkeinheit umfasst, mit der eine native Auflösung des Kraftfahrzeugleuchtmoduls durch zumindest zeitweise Strahlablenkung mittels der Ablenkeinheit visuell erhöht werden kann, wobei das Verfahren die folgenden Schritte umfasst:
a) Empfangen eines Bildsignals, wobei das Bildsignal ein Sollbild einer Lichtverteilung enthält, wobei das Sollbild eine Auflösung aufweist, die die native Auflösung des Kraftfahrzeugleuchtmoduls überschreitet,
b) Umwandeln des gemäß Schritt a) empfangenen Sollbildes in zwei niedriger aufgelöste Bilder, die gemeinsam ein Bildpaar bilden, wobei die niedriger aufgelösten Bilder dergestalt gewählt sind, dass diese jeweils die native Auflösung des Kraftfahrzeugleuchtmoduls aufweisen, wobei die niedriger aufgelösten Bilder zudem dergestalt aufeinander abgestimmt sind, dass zumindest eines der zwei niedriger aufgelösten Bildermittels der Ablenkeinheit abgelenkt ist, sodass die Überlagerung der beiden niedriger aufgelösten Bilder einen zu dem Sollbild ähnlicheren Bildeindruck ergibt, als die Abbildung der beiden niedrig aufgelösten Bilder für sich genommen,
c) Ansteuerung des Kraftfahrzeugleuchtmoduls, wobei die Ansteuerung dergestalt erfolgt, dass die beiden niedrig aufgelösten Bilder des Bildpaars zeitlich nacheinander durch das Kraftfahrzeugleuchtmodul abgestrahlt werden.

Unter dem Ausdruck "native Auflösung" wird dabei jene Auflösung verstanden, die durch die Summe der einzeln ansteuerbaren Segmente zur Lichtabstrahlung gegeben ist. Sind z.B. die Segmente in zwei Zeilen und zwei Spalten angeordnet und einzeln ansteuerbar, so entspricht das einer nativen Auflösung von 2x2, wobei jedes einzeln ansteuerbare Segment auch als Leuchtpixel bezeichnet werden kann. Das Kraftfahrzeugleuchtmodul weist vorzugsweise eine native Auflösung von zumindest 2x2 auf, besonders bevorzugt handelt es sich um ein hochauflösendes Kraftfahrzeugleuchtmodul.

Durch die zumindest zeitweise Strahlablenkung mittels der Ablenkeinheit ist es möglich, die durch das menschliche Auge wahrgenommene Auflösung gegenüber der nativen Auflösung zu erhöhen.

Der Ausdruck "wobei das Bildsignal ein Sollbild einer Lichtverteilung enthält" ist so zu verstehen, dass das Bildsignal jedenfalls Informationen enthält, mit denen das Sollbild reproduzierbar ist.

Es sei erwähnt, dass das Sollbild auch in mehr als zwei niedriger aufgelöste Bilder aufgeteilt werden kann. Es ist auch eine Aufteilung des Sollbildes auf eine "Strecke" von drei oder mehr Bildern denkbar - es werden so gesehen einfach mehrere Bildpaare gebildet. Zudem können beide niedriger aufgelösten Bilder von der Ablenkung mittels der Ablenkeinheit betroffen sein. Hinsichtlich der Frage der Ähnlichkeit von Bildern sind der Fachperson geeignete Algorithmen zur Beurteilung bekannt. Es kann dabei z.B. die gemeinsame Information (siehe z.B. Schlagwort "Mutual Information", zu welchen Begriff es auch beispielsweise online umfangreiche Informationen gibt, auch in der online-Enzyklopädie "Wikipedia").

Insbesondere kann vorgesehen sein, dass das Kraftfahrzeugleuchtmodul einzeln ansteuerbare Leuchtpixel aufweist, wobei die Segmentierung der Lichtverteilung durch die einzeln ansteuerbaren Leuchtpixel realisiert ist, die in einer Matrix mit einer Auflösung von zumindest zwei Zeilen und zwei Spalten weitgehend lückenlos nebeneinander angeordnet sind.

Weiters kann vorgesehen sein, dass eine maximale durchgeführte Ablenkung durch die Ablenkeinheit so konzipiert ist, dass im Vergleich zu einem nicht abgelenkten Referenzzustand der abgelenkte Zustand einen vertikalen sowie einen horizontalen Versatz um eine halbe Pixelbreite aufweist, sodass bei Vorliegen der maximalen Amplitude der Ablenkung - abgesehen von Randpixeln - jedes abgelenkte Leuchtpixel mit vier nichtabgelenkten Leuchtpixeln räumlich zu je 25% überlappt. Die wahrgenommene Auflösung kann dadurch das Vierfache der nativen Auflösung betragen. Unter deinem Randpixel wird ein Leuchtpixel verstanden, der nicht allseitig von weiteren Leuchtpixeln umschlossen ist, sondern zumindest an seiner Seite frei von benachbarten Leuchtpixeln ist. Es stellt damit einen Randbereich des abzustrahlenden Bildes dar.

Insbesondere kann vorgesehen sein, dass die Ablenkeinheit eine neutrale Stellung aufweist, in der die Ablenkeinheit im Falle eines Ausfalles einer Stromversorgung der Ablenkeinheit oder einer zur Steuerung der Ablenkeinheit vorgesehenen Steuergröße automatisch einnimmt. Unter einer neutralen Stellung wird jene Stellung der Ablenkeinheit verstanden, in der keine elektrische Spannung an die Ablenkeinheit angelegt ist. Diese Stellung kann, muss sich aber nicht, von einer Nullposition unterscheiden, in der die Ablenkeinheit keine wesentliche Ablenkung des die Ablenkeinheit passierenden Lichtes bewirkt. Für den Fall, dass der Aktuator nicht benötigt wird oder abgeschaltet werden muss, wird eine Ausgabe der Lichtfunktion dadurch weiterhin gewährleistet.

Weiters kann vorgesehen sein, dass ein Algorithmus zur Überprüfung der korrekten Berechnung und Ausgabe der Steuergröße vorgesehen ist, wobei im Falle des Feststellens eines Fehlbetriebs die Ablenkeinheit in die neutrale Stellung gelenkt wird.

Insbesondere kann vorgesehen sein, dass vor oder während dem Schritt b) die folgenden zusätzlichen Teilschritte vorgenommen werden:
I) Empfangen eines Sollbetriebssignals, wobei das Sollbetriebssignal Informationen zu zumindest einem der folgenden Kriterien enthält: Sollbildschärfe; Sollenergieeffizienz; Solltemperatur; Sollreinheit; Offset_Korrektur;
II) Berechnung daraus ableitbarer Steuerparameter zur Beeinflussung einer zur Steuerung der Ablenkeinheit vorgesehenen Steuergröße.

Gegebenenfalls kann auch eine Anpassung der Berechnung der niedrig aufgelösten Bilder vorgesehen sein, z.B. wenn die Amplitude reduziert wird, sodass der Versatz der niedrig aufgelösten Bilder zueinander geringer wird und sich dadurch die Randbedingungen bei der Überlagerung der beiden Bilder ändern.

Die Information des Sollbildes kann auch Informationen über die Solllichtintensität der einzelnen Bildpunkte des Bildes enthalten. Diese Information kann an die Lichtquelle des Kraftfahrzeugleuchtmoduls weitergegeben und durch diese umgesetzt werden.

Weiters kann vorgesehen sein, dass nach Teilschritt II) ein Teilschritt III) folgt: Anwendung einer Bildbearbeitungsfunktion auf das gesamte Lichtbild bzw. das Sollbild und/oder auf eines oder beide niedriger aufgelöste Bilder. Das bedeutet, dass nach Teilschritt II) ein Teilschritt III) folgt, welcher eine Anwendung einer Bildbearbeitungsfunktion auf das gesamte Lichtbild beinhaltet, um den Gesamteindruck eben dieses Lichtbilds zu ändern. Eine solche Bildbearbeitungsfunktion kann beispielsweise darauf abzielen die im Lichtbild enthaltenen Intensitätsübergänge weicher erscheinen zu lassen, was beispielsweise durch die Anwendung eines Gaussian-Blurrs auf das Lichtbild realisiert werden kann.

Insbesondere kann vorgesehen sein, dass zum Erreichen einer aus dem Sollbetriebssignal gemäß Schritt a) abgeleiteten Sollenergieeffizienz die Zeitdauer zwischen den Nulldurchgängen manipuliert wird, und zwar so, dass in jenem Fall, in dem eine Istenergieeffizienz der Ablenkeinheit die Sollenergieeffizienz unterschreitet, die Zeitdauer zwischen den Nulllagendurchgängen erhöht wird. Je höherfrequent die Ablenkeinheit angesteuert wird, desto höher ist der Energieverbrauch und die Energieeffizienz sinkt. Die Verringerung der Frequenz ermöglich einen sparsameren Betrieb der Leuchtvorrichtung, was erneut zum Einsparen von Energie und Erhöhung der Lebensdauer des Aktuators und der dafür vorgesehenen Auslenkvorrichtung beiträgt.

Weiters kann vorgesehen sein, dass die Sollenergieeffizienz dergestalt vorgegeben wird, dass diese in Abhängigkeit von einer erfassten Fahrgeschwindigkeit eines das Kraftfahrzeugleuchtmodul mitsamt der Ablenkeinheit umfassenden Fahrzeugs bestimmt wird, und zwar so, dass mit abnehmender Fahrgeschwindigkeit die geforderte Sollenergieeffizienz zunimmt. Zum Beispiel kann dies in Abhängigkeit von der Messung eines Geschwindigkeitssensor eines Automobils erfolgen. So kann beispielsweis im Standbetrieb bei einer Welcome-Projektion die Frequenz niedriger gewählt werden als im Fahrtbetrieb, da es im Fahrbetrieb bei Wahl niedriger Frequenzen zu ungewollten stroboskopartigen Effekten kommen kann.

Insbesondere kann vorgesehen sein, dass zum Erreichen einer aus dem Sollbetriebssignal gemäß Schritt a) abgeleiteten Solltemperatur die Zeitdauer zwischen den Nulldurchgängen manipuliert wird, und zwar so, dass in jenem Fall, in dem eine Isttemperatur der Ablenkeinheit oder des Kraftfahrzeugleuchtmoduls eine Solltemperatur überschreitet, die Zeitdauer zwischen den Nulllagendurchgängen erhöht wird.

Es sei an dieser Stelle erwähnt, dass die genannten einzelnen Funktionen bzw. Optimierungsaufgaben auch gewichtet bzw. hierarchisch gegliedert werden können. Wenn z.B. die Funktion der Ablenkeinheit wegen dem Erreichen zu hoher Temperaturen gefährdet ist, könnten die Temperaturanforderungen höher gewichtet werden als Anforderungen, die in Abhängigkeit von der Fahrgeschwindigkeit festgelegt werden. Die höchsten Gewichtungen können dabei alle sicherheitsrelevanten Anforderungen haben. Wenn bspw. die Solltemperatur reduziert werden soll (z.B. durch Verringerung der Ablenkfrequenz oder Senkung der Amplitude) und gleichzeitig Staub/Schmutz über einem zulässigen Grenzwert detektiert wird (was durch Erhöhung der Ablenkfrequenz bekämpft werden könnte). In diesem Fall wird die Anforderung an die Solltemperatur höher gewichtet, da eine zu hohe Temperatur zu einem irreparablen Defekt der Ablenkeinheit führen kann.

Weiters kann vorgesehen sein, dass zum Erreichen einer aus dem Sollbetriebssignal gemäß Schritt a) abgeleiteten Sollbildschärfe die Amplitude der Ablenkung manipuliert wird, und zwar so, dass bei Vorgabe maximaler Schärfe eine maximale Amplitude vorgegeben wird, und mit abnehmender Sollbildschärfe die Amplitude reduziert wird. Das bedeutet nicht zwingend eine Frequenzerhöhung, sondern ist auch dadurch erreichbar, dass die Flanken, die zwei Endpositionen miteinander verbinden, steiler sind und die Endpositionen dadurch bei gleichbleibender Zeitdauer des gesamten Arbeitstaktes zeitlich länger gehalten werden können. Je schneller die Aktuatorbewegung bzw. die Positionsänderung des ablenkenden Elements der Ablenkeinheit durchgeführt wird, umso schärfer wird das Bild, je langsamer umso mehr werden die Übergänge zwischen dem ersten Frame und dem zweiten Frame miteinander "vermischt".

Beispielsweise kann es bei einer Abblendlichtverteilung vorteilhaft sein, dass die Lichtverteilung ein Blurring, also eine Glättung zwischen dem visuell wahrnehmbaren Licht benachbarter Pixel, aufweist. Sollte dies nötig sein, kann der Auslenkwinkel reduziert werden. Auch bei Übergängen von einer Standardlichtverteilung in eine andere kann ein Blurring vorteilhaft sein.

Insbesondere kann vorgesehen sein, dass zum Erreichen einer aus dem Sollbetriebssignal gemäß Schritt a) abgeleiteten Sollbildauflösung die Amplitude der Ablenkung manipuliert wird, und zwar so, dass bei Vorgabe maximaler Sollbildauflösung eine maximale Amplitude vorgegeben wird, und mit abnehmender Sollbildauflösung die Amplitude reduziert wird.

Weiters kann vorgesehen sein, dass in dem Teilschritt II) zudem in Abhängigkeit von dem Sollbetriebssignal eine optimale Ablenkung der beiden niedrig aufgelösten Bilder des Bildpaares zueinander berechnet wird.

Insbesondere kann vorgesehen sein, dass das Kraftfahrzeugleuchtmodul zur Abstrahlung voneinander unterschiedlicher Lichtbilder mit einer Frequenz von zumindest 60 Hz, typischerweise zwischen 60 Hz und 160 Hz eingerichtet ist, sodass unterschiedliche Sollbilder mit einer Frequenz von zumindest 30 Hz eingehen und in einzelne niedrig aufgelöste Bilder des jeweiligen Bildpaares mit einer Frequenz von zumindest 60 Hz umgewandelt und durch das Kraftfahrzeugleuchtmodul nacheinander abgestrahlt werden. Die Ablenkeinheit kann daher mit einer Frequenz von zumindest 60 Hz angesteuert werden bzw. ist die Ablenkeinheit dazu eingerichtet, ausgehend von einer beliebigen Ausgangsposition eine gewünschte Ablenkposition innerhalb von maximal 1/60 Sekunde einzunehmen.

Weiters kann vorgesehen sein, dass die Ablenkeinheit eine Glasplatte umfasst, die um zumindest eine, vorzugsweise genau eine Achse oder genau zwei Achse verschwenkbar oder verschiebbar ausgebildet ist.

Insbesondere kann vorgesehen sein, dass die Glasplatte eine plane Lichteintrittsfläche und eine hierzu planparallele Lichtaustrittsfläche aufweist, wobei die Ablenkeinheit je Achse, um die die Glasplatte verschwenkbar ist, zumindest eine elektrische Spule aufweist, wobei auf der Glasplatte für jede Spule je ein Mittel zur magnetischen Kopplung mit der jeweiligen Spule angeordnet ist, sodass durch Bestromung der jeweiligen Spule eine Kraft auf das zugehörige Mittel ausübbar ist, und zwar so, dass die Glasplatte in Abhängigkeit von der Bestromung der Spule um die jeweilige Achse geschwenkt wird, wobei vorzugsweise zudem die Ablenkeinheit je Achse, um die die Glasplatte verschwenkbar ist, ein mechanisches Rückstellelement, insbesondere ein Federelement, zur Rückstellung der Glasplatte in eine neutrale Stellung aufweist, die die Glasplatte im Falle eines Ausfalles einer Stromversorgung der Ablenkeinheit oder einer zur Steuerung der Ablenkeinheit vorgesehenen Steuergröße automatisch einnimmt. Die Glasplatte ist dabei im Strahlengang des Kraftfahrzeugleuchtmoduls angeordnet. Die Strahlablenkung erfolgt durch Lichtbrechung beim Ein- und Austritt aus der Glasplatte. Natürlich können auch zwei oder mehr Rückstellelemente pro Achse vorgesehen sein.

Weiters betrifft die Erfindung ein Kraftfahrzeugleuchtmodul, wobei das Kraftfahrzeugleuchtmodul zur Abstrahlung einer segmentierten Lichtverteilung eingerichtet ist, wobei das Kraftfahrzeugleuchtmodul eine Ablenkeinheit umfasst, mit der eine native Auflösung des Kraftfahrzeugleuchtmoduls durch zumindest zeitweise Strahlablenkung mittels der Ablenkeinheit visuell erhöht werden kann, wobei das Kraftfahrzeugleuchtmodul zur Umsetzung des erfindungsgemäßen Verfahrens eingerichtet ist.

Sämtliche im Verfahren genannte Vorrichtungsmerkmale können sofern nicht anders angegeben auch Teil des Kraftfahrzeugleuchtmoduls bilden. Auch können in umgekehrter Weise sämtliche in Zusammenhang mit dem Kraftfahrzeugleuchtmodul genannten Vorrichtungsmerkmale Teil des zuvor beschriebenen Verfahrens bilden. Das Kraftfahrzeugleuchtmodul kann sowohl eine Signalleuchte als auch einen Kraftfahrzeugscheinwerfer betreffen. Das Kraftfahrzeugleuchtmodul ist vorzugsweise für den Einsatz in einer Kraftfahrzeugleuchte, insbesondere in einer Signallichtleuchte oder in einem Kraftfahrzeugscheinwerfer konzipiert. Demnach kann das Kraftfahrzeugleuchtmodul auch Teil der genannten Vorrichtungen sein.

Die Erfindung ist im Folgenden anhand beispielhafter und nicht einschränkender Ausführungsformen näher erläutert, die in den Figuren veranschaulicht sind. Darin zeigt
Figur 1a eine Seitenansicht auf eine schematische Darstellung eines Kraftfahrzeugleuchtmoduls zum Einsatz im Zusammenhang mit der vorliegenden Erfindung,
Figur 1b die Seitenansicht gemäß Fig. 1a mit einer verkippten Ablenkeinheit,
Figur 1c eine Draufsicht auf das Kraftfahrzeugleuchtmodul in der Position gemäß Fig. 1b,
Figur 2a eine schematische Darstellung einer ersten Ausführungsform einer Ablenkeinheit,
Figur 2b eine schematische Darstellung einer zweiten Ausführungsform einer Ablenkeinheit,
Figur 2c eine schematische Darstellung einer dritten Ausführungsform einer Ablenkeinheit,
Figur 3 ein Diagramm, in dem der statische Zusammenhang zwischen Spulenstrom und Auslenkung einer typischen Ablenkeinheit, wie sie für die Erfindung eingesetzt werden kann, gezeigt ist,
Figur 4 eine Darstellung zweier Lichtverteilungen, die zeitlich nacheinander mittels einem Kraftfahrzeugleuchtmodul gemäß der Erfindung abstrahlbar sind,
Figur 5 ein Blockschaltbild bezüglich einzelner möglicher Komponenten der Erfindung,
Figur 6a eine Darstellung eines ersten zeitlichen Verlaufes von Auslenkungen einer Ablenkeinheit, die in der vorliegenden Erfindung eingesetzt werden kann,
Figur 6b eine Darstellung eines zweiten zeitlichen Verlaufes von Auslenkungen einer Ablenkeinheit, die in der vorliegenden Erfindung eingesetzt werden kann,
Figur 6c eine Darstellung eines zweiten zeitlichen Verlaufes von Auslenkungen einer Ablenkeinheit, die in der vorliegenden Erfindung eingesetzt werden kann,
Figur 7a einen Ausschnitt einer Darstellung eines Sollbildes sowie ein dazu errechnetes Bild mit niedrigerer Auflösung,
Figur 7b einen Ausschnitt einer Darstellung eines Sollbildes Ssoll sowie ein dazu errechnetes Bild mit niedrigerer Auflösung S_low,
Figur 7c ein weiteres Beispiel einer Überlagerung zweier niedrig aufgelöster Bilder,
Figur 7d ein weiteres Beispiel einer Überlagerung zweier niedrig aufgelöster Bilder umfassend Grauflächen,
Figur 7e ein Beispiel einer Anwendung eines Gaussian-Blur-Filters,
Figur 8 eine beispielhafte Ablenkung eines Lichstrahles mittels einer Glasplatte sowie eine zugehörige Formel zur Berechnung des Ausmaßes der Ablenkung,
Figur 9 eine Möglichkeit zur Anpassung der Helligkeit einzelner Lichtpixel, und
Figur 10 ein beispielhaftes Ablaufdiagramm zu dem erfindungsgemäßen Verfahren.

In den folgenden Figuren bezeichnen - sofern nicht anders angegeben - gleiche Bezugszeichen gleiche Merkmale.

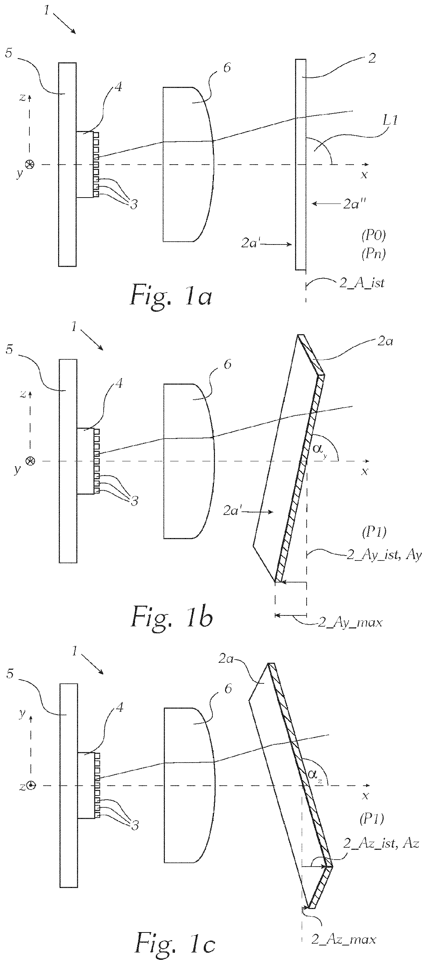

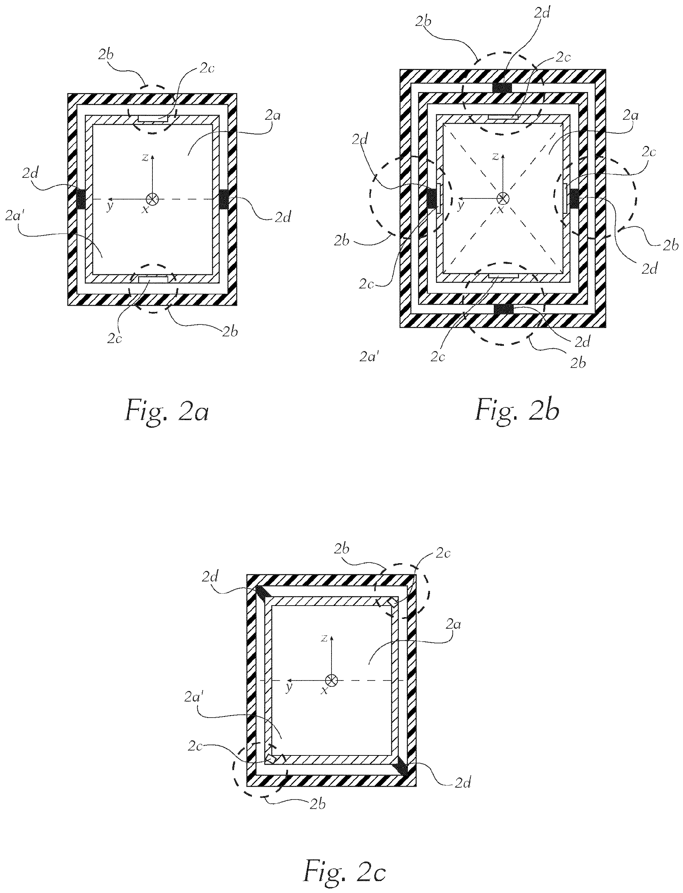

Figur 1a zeigt eine Seitenansicht auf eine schematische Darstellung eines Kraftfahrzeugleuchtmoduls 1 zum Einsatz im Zusammenhang mit der vorliegenden Erfindung. Das Kraftfahrzeugleuchtmodul 1 ist zur Abstrahlung einer segmentierten Lichtverteilung eingerichtet. Es umfasst hierzu eine Lichtquelle 4, die z.B. eine Matrix aus einzeln ansteuerbaren LEDs umfasst, wobei jede LED einem Segment einer abstrahlbaren Lichtverteilung zugeordnet ist und ein Leuchtpixel 3 der Lichtverteilung bildet. Natürlich können auch andere Lichtquellen oder Lichtquellsysteme eingesetzt werden, die zur Erzeugung einer segmentierten Lichtverteilung geeignet sind. Die Lichtquelle ist typischerweise auf einem Schaltungsträger 5, insbesondere auf einem PCB, angeordnet. Das von der Lichtquelle 4 abgestrahlte Licht kann z.B. ein optisches Bauelement 6, beispielsweise eine Aufweitungsoptik, passieren, bevor dieses dann in eine Ablenkeinheit 2 eintritt. Typischerweise wird durch die Anzahl der einzeln ansteuerbaren Lichtbereiche der Lichtquelle 4 eine native Auflösung An festgelegt. Weist die Lichtquelle 4 z.B. 100 einzeln ansteuerbare LEDs auf, die in einer Matrix von 10 Spalten und 10 Reihen angeordnet sind, ergeben sich daraus 100 Segmente bzw. eine native Auflösung An von 10x10. Die Ablenkeinheit 2 ist dazu eingerichtet, von der Lichtquelle 4 abgestrahlte Lichtstrahlen L1 abzulenken. Hierzu kann vorgesehen sein, dass die Ablenkeinheit 2 eine Glasplatte 2a umfasst, die um zumindest eine Achse verschwenkbar oder verschiebbar ausgebildet ist. Nähere Informationen hierzu werden noch nachfolgend im Zusammenhang mit Figuren 2a bis 2c erörtert.

In Fig. 1a bis 1c ist erkennbar, dass die Strahlablenkung durch die Ablenkeinheit 2 z.B. durch Brechung des Lichts bei Ein- und Austritt aus der Ablenkeinheit 2 erfolgt. Genauer gesagt wird das Licht an einer Lichteintrittsfläche 2a' sowie an einer Lichtaustrittsfläche 2a" der Glasplatte 2a gebrochen. Dadurch wird das austretende Licht gegenüber dem Lichtpfad des eintretenden Lichts versetzt. Der Lichtstrahl L1 wird also abgelenkt. Diese Ablenkung wird bei der vorliegenden Erfindung dazu genutzt, eine native Auflösung An des Kraftfahrzeugleuchtmoduls 1 durch zumindest zeitweise Strahlablenkung mittels der Ablenkeinheit 2 visuell zu erhöhen. Die wird durch zeitlich veränderliche Ablenkung mittels der Ablenkeinheit 2 erzielt, und zwar typischerweise mit einer Geschwindigkeit, die so hoch gewählt ist, dass für das menschliche Auge nacheinander abgestrahlte Lichtverteilungen, die sich zumindest durch unterschiedliche Positionen der Ablenkeinheit 2 hinsichtlich der Lage der einzelnen Segmente voneinander unterscheiden, wie eine gemeinsame Lichtverteilung mit entsprechend höherer Auflösung wahrgenommen werden. Die Frequenz beträgt dabei vorzugsweise zumindest 60 Hz.

Zur besseren Übersicht wurde in einigen Figuren ein kartesisches Koordinatensystem eingezeichnet, das so gewählt wurde, dass die x-Achse mit einer Hauptabstrahlrichtung (im Falle eines Fahrzeugscheinwerfers typischerweise die Vorwärtsfahrtrichtung eines Fahrzeuges) zusammenfällt, die y-Achse orthogonal dazu und horizontal orientiert ist, und die z-Achse vertikal orientiert ist und dadurch rechtwinkelig zu der durch die x- und y-Achse aufgespannten Ebene orientiert ist. Im vorliegend gezeigten Ausführungsbeispiel gemäß Fig. 1a bis 1c ist die Glasplatte 2a um zwei Achsen schwenkbar, nämlich um die y-Achse (siehe Fig. 1b) sowie um die z-Achse (siehe Fig. 1c).

Fig. 1a zeigt die Glasplatte 1a in einem nicht abgelenkten Referenzzustand P0, der in dem vorliegenden Beispiel mit einer neutralen Stellung Pn zusammenfällt. Diese zwei Stellungen können aber auch voneinander abweichen. Die Ablenkeinheit 2 kann also eine neutrale Stellung Pn aufweisen, die die Ablenkeinheit 2 im Falle eines Ausfalles einer Stromversorgung der Ablenkeinheit 2 oder einer zur Steuerung der Ablenkeinheit 2 vorgesehenen Steuergröße 2_s automatisch einnimmt. Eine Amplitude 2_A_ist der Ablenkung ist in der Position gemäß Fig. 1a gleich Null.

Wie bereits erwähnt, kann vorgesehen sein, dass die Segmentierung der Lichtverteilung durch einzeln ansteuerbare Leuchtpixel 3 realisiert ist. Vorzugsweise sind diese in einer Matrix mit einer Auflösung von zumindest zwei Zeilen und zwei Spalten weitgehend lückenlos nebeneinander angeordnet. Eine maximale Amplitude 2_Ay_max (siehe Fig. 1b) und/oder 2_Az_max (siehe Fig. 1c) der Ablenkung so gewählt ist, dass im Vergleich zu einem nicht abgelenkten Referenzzustand P0 der abgelenkte Zustand P1 einen vertikalen sowie einen horizontalen Versatz um eine halbe Pixelbreite aufweist, sodass bei Vorliegen der maximalen Amplitude der Ablenkung - abgesehen von Randpixeln - jedes abgelenkte Leuchtpixel 3 (aus einer Sicht nach Durchtritt durch die Ablenkeinheit 2) mit vier nichtabgelenkten Leuchtpixeln räumlich zu je 25% überlappt.

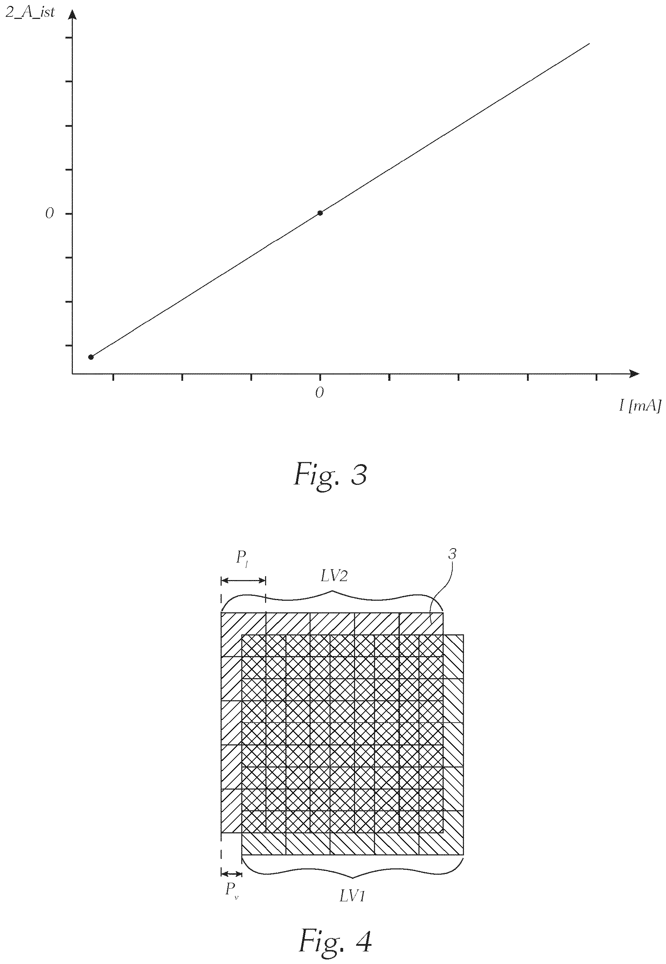

Fig. 1b zeigt die Seitenansicht gemäß Fig. 1a mit einer verkippten Ablenkeinheit 2. Die Ablenkeinheit 2 bzw. die Glasplatte 2a ist dabei um den Winkel α_{y} um die y-Achse verschwenkt worden, woraus der Amplitude der Ablenkung 2_Ay_ist resultiert. Der Wert von 2_Ay_ist ist dabei etwas geringer als die maximale Ablenkung in diese Richtung, nämlich 2_Ay_max, sodass die maximale Erhöhung der wahrnehmbaren Auflösung gerade noch nicht erfolgt, wie anhand von Fig. 4 erkennbar ist. Die Verschiebung Pᵥ eines Leuchtpixels 3 eines nachgeordneten Bildes (bzw. einer entsprechenden Lichtverteilung) bzw. einer nachgeordneten segmentierten Lichtabstrahlung unterschreitet dabei die halbe Seitenlänge Pₗ eines Leuchtpixels 3. Erst wenn die Verschiebung Pᵥ (sowohl aufwärts als auch seitlich) der Leuchtpixel 3 den halben Betrag der Seitenlänge Pₗ eines Leuchtpixels 3 beträgt, wird die maximale Erhöhung der wahrnehmbaren Auflösung erreicht.

Figur 1c zeigt eine Draufsicht auf das Kraftfahrzeugleuchtmodul 1 in der Position gemäß Fig. 1b. Die Glasplatte 2a ist dabei um den Winkel a, um die z-Achse verschwenkt worden, woraus der Amplitude der Ablenkung 2_Az_ist resultiert. Der Wert von 2_Az_ist ist dabei etwas geringer als die maximale Ablenkung in diese Richtung, nämlich 2_Az_max, sodass auch hier die maximale Erhöhung der wahrnehmbaren Auflösung gerade noch nicht erfolgt.

Figur 2a eine schematische Darstellung einer ersten Ausführungsform einer Ablenkeinheit 2. Die Ablenkeinheit 2 umfasst dabei die bereits erwähnte Glasplatte 2a sowie zwei mechanische Rückstellelemente 2d, insbesondere Federelemente 2b in Form von Drehfedern, die entlang der y-Achse angeordnet sind und dadurch ein Schwingen der Glasplatte 2a um die y-Achse ermöglichen. Normal zur y-Achse, und zwar entlang der z-Achse, sind zwei elektrische Spulen 2b angeordnet, die einen Teil der Ablenkeinheit 2 bilden. Die Spulen 2b sind bestrombar und zur Ausübung einer magnetischen Kraft auf ein an der Glasplatte dazu korrespondierend angeordnetes Mittel 2c zur magnetischen Kopplung, beispielsweise eines Magneten, eingerichtet.

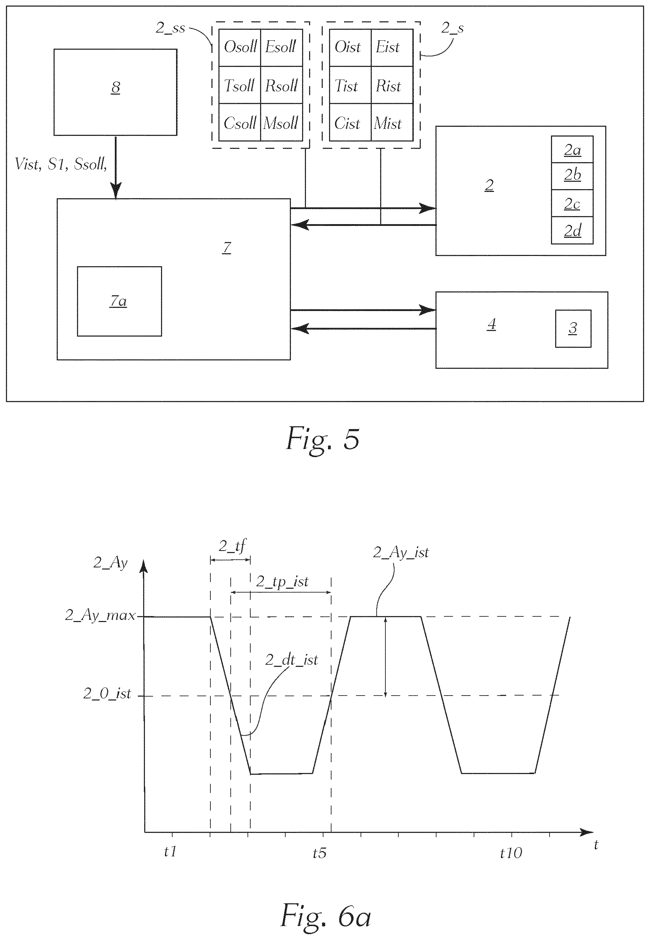

Anders ausgedrückt kann gesagt werden, dass die Glasplatte 2a eine plane Lichteintrittsfläche 2a' und eine hierzu planparallele Lichtaustrittsfläche 2a" (siehe Fig. 1a) aufweist, wobei die Ablenkeinheit 2 je Achse, um die die Glasplatte 2a verschwenkbar ist, zumindest eine elektrische Spule 2b aufweist, wobei auf der Glasplatte 2a für jede Spule 2b je ein Mittel 2c zur magnetischen Kopplung mit der jeweiligen Spule 2b angeordnet ist, sodass durch Bestromung der jeweiligen Spule 2b eine Kraft auf das zugehörige Mittel 2c ausübbar ist, und zwar so, dass die Glasplatte 2a in Abhängigkeit von der Bestromung der Spule 2b um die jeweilige Achse geschwenkt, insbesondere gedreht, wird. Je Achse, um die die Glasplatte 2a verschwenkbar ist, ist ein mechanisches Rückstellelement 2d, insbesondere ein Federelement, zur Rückstellung der Glasplatte 2a in eine neutrale Stellung Pn vorgesehen, die die Glasplatte 2a im Falle eines Ausfalles einer Stromversorgung der Ablenkeinheit 2 oder einer zur Steuerung der Ablenkeinheit 2 vorgesehenen Steuergröße 2_s (siehe Fig. 5) automatisch einnimmt. Ergänzend oder alternativ zu dieser Art der elektromechanischen Kraftübertragung können auch entsprechend gekoppelte Piezoaktuatoren eingesetzt werden.

Figur 2b zeigt eine schematische Darstellung einer zweiten Ausführungsform einer Ablenkeinheit 2. Anders als in Fig. 2a ist die Glasplatte 2a darin um zwei Achsen, nämlich die Achsen y und z, schwenkbar. Auch hier sind entlang der Schwenkachsen Rückstellelemente 2d angeordnet. Dazwischen sind jeweils Spulen 2b sowie Kopplungsmittel 2c angeordnet. Diese Ausführungsform ein Verschwenken mit zwei Freiheitsgraden, d.h. die Ablenkung um die Achse y erfolgt unabhängig von der Ablenkung um die Achse z und umgekehrt. Es lassen sich dadurch auch diagonale Ablenkungen - durch Ablenkung um beide Achsen - erzielen.

Figur 2c zeigt eine schematische Darstellung einer dritten Ausführungsform einer Ablenkeinheit 2. Hier ist die Aufhängung des Glasplatte 2a so gewählt, dass eine Ablenkung bereits diagonal zu den Achsen y und z erfolgt. D.h. die Ablenkachse liegt quer zu diesen beiden Achsen y und z. Trotz des Umstands, dass die Anzahl der Freiheitsgrade der Ablenkung vorliegend nur eins beträgt, ist aufgrund dieser Wahl der Ablenkachse eine Ablenkung möglich, die eine Erhöhung der visuell wahrnehmbaren Auflösung gegenüber der nativen Auflösung um den Faktor vier ermöglicht.

Figur 3 zeigt ein Diagramm, in dem der statische Zusammenhang zwischen Spulenstrom und Auslenkung einer typischen Ablenkeinheit 2, wie sie für die Erfindung eingesetzt werden kann, gezeigt ist. Darin ist für den statischen Fall ein linearer Zusammenhang zwischen Strom und Auslenkung zu erkennen. Die Auslenkung 2_A_ist ist dabei proportional zu dem in die Spulen 2b eingeprägten Strom I. Im dynamischen Betrieb werden natürlich die Massenträgheit des Glasplättchens 2a, etwaige Trägheiten der Rückstellelemente 2d, induktive Effekte der Spulen 2d etc. berücksichtigt. Die Fachperson ist dabei in der Lage, entsprechende Steueralgorithmen zur Ansteuerung der Spulen 2b zu realisieren, um die gewünschten Positionen der Glasplatte 2a des Ablenkelements 2 zu jedem Zeitpunkt zu erreichen.

Figur 4 zeigt eine Darstellung zweier Lichtverteilungen LV1 und LV2, die zeitlich nacheinander mittels einem Kraftfahrzeugleuchtmodul 1 gemäß der Erfindung abstrahlbar sind. Die Lichtverteilungen umfassen dabei jeweils 5x5 Pixel, die über- und nebeneinander gereiht gemeinsam ein Quadrat bilden. Das der zweiten Lichtverteilung LV2 zugeordnete Quadrat ist dabei in Bezug auf das der ersten Lichtverteilung LV1 zugeordnete Quadrat um etwas weniger als eine halbe Pixellänge Pₗ versetzt, und zwar sowohl in horizontaler als auch in vertikaler Richtung. Es ist dabei erkennbar, dass die Leuchtpixel einander überlappen und in jenem Bereich, in dem sich die Quadrate überlappen, der Eindruck entsteht, dass die Anzahl der Leuchtpixel nun vierfach erhöht ist, da jedes Leuchtpixel in vier unterschiedliche überlappende Bereiche geteilt ist. Durch unmittelbar zeitlich aufeinanderfolgende Abstrahlung der Lichtverteilung LV1 und LV2 entsteht daher ein visueller Eindruck einer Auflösung, die deutlich gegenüber der nativen Auflösung (vorliegend 5x5) des Kraftfahrzeugleuchtmoduls erhöht ist. Der Eindruck der Erhöhung der Auflösung ist maximal, wenn der Versatz der Leuchtpixel ½ Pixellänge Pₗ beträgt.

Figur 5 zeigt ein Blockschaltbild bezüglich einzelner möglicher Komponenten der Erfindung. Darin ist erkennbar, dass die Leuchtpixel 3 der Lichtquelle 4 zugeordnet sind, die von einer Steuereinheit 7 angesteuert werden. Die Steuereinheit 7 umfasst eine Berechnungseinheit 7a, die z.B. in Abhängigkeit von einem eingehenden Bildsignal S1 die Ansteuerung der Lichtquelle 4 vornimmt, und zwar so, dass entsprechend eines durch das Bildsignal S1 vorgegeben Bildes, auch Sollbild Ssoll genannt, jene Segmente bzw. Leuchtpixel 3 angesteuert werden, sodass das durch das Bildsignal S1 vorgegebene Bild möglichst getreu abgebildet wird. Insbesondere in jenen Fällen, in denen das vorgegebene Bild eine Auflösung aufweist, die die native Auflösung An des Kraftfahrzeugleuchtmoduls 1 übersteigt, so kann durch gezielte Berechnung unterschiedlicher Lichtverteilungen LV1 und LV2 sowie Anpassung/Berechnung der den jeweiligen Lichtverteilungen zugehörigen Ablenkpositionen, z.B. Pn, P0, P1, durch Überlagerung der unterschiedlichen Lichtverteilungen ein visueller Eindruck geschaffen werden, der dem vorgegebenen Sollbild Ssoll möglichst gut gleicht. Das Bildsignal S1 kann der Steuereinheit 7 über eine Datenquelle 8 zugeführt werden.

Bei der Ansteuerung der Ablenkeinheit 2 bestehen gewisse Freiheitsgrade. Grundsätzlich geht eine erhöhte Frequenz der Ablenkung der Glasplatte 2a sowie eine größere Amplitude der Ablenkung mit einem erhöhten Energieverbrauch und Verschleiß der daran beteiligten elektromechanischen Komponenten einher. Abhängig davon, wie genau das Sollbild Ssoll reproduziert werden soll sowie auch davon, ob ev. weitere Funktionen wie z.B. ein Blurring auf das Sollbild Ssoll angewendet werden soll, kann gezielt in die Berechnung der Ablenkung mittels der Ablenkeinheit 2 eingegriffen werden, wie in Zusammenhang mit den Figuren 6a bis 6c noch näher erörtert wird. Hierzu wird der Steuereinheit 7 ein Sollbetriebssignal 2_ss geliefert, das Auskunft darüber gibt, wie genau das Sollbild Ssoll abgebildet werden soll, ob dabei andere Randbedingungen wie z.B. Vorgaben zu Sollenergieeffizienz Esoll, Solltemperatur Tsoll, Sollbildauflösung Rsoll, Sollbildschärfe Csoll, Sollreinheit Msoll, und/oder Offset-Korrektur Osoll berücksichtigt werden sollen, und falls ja, mit welcher hierarchischen Gewichtung einzelne Vorgaben zu berücksichtigen sind.

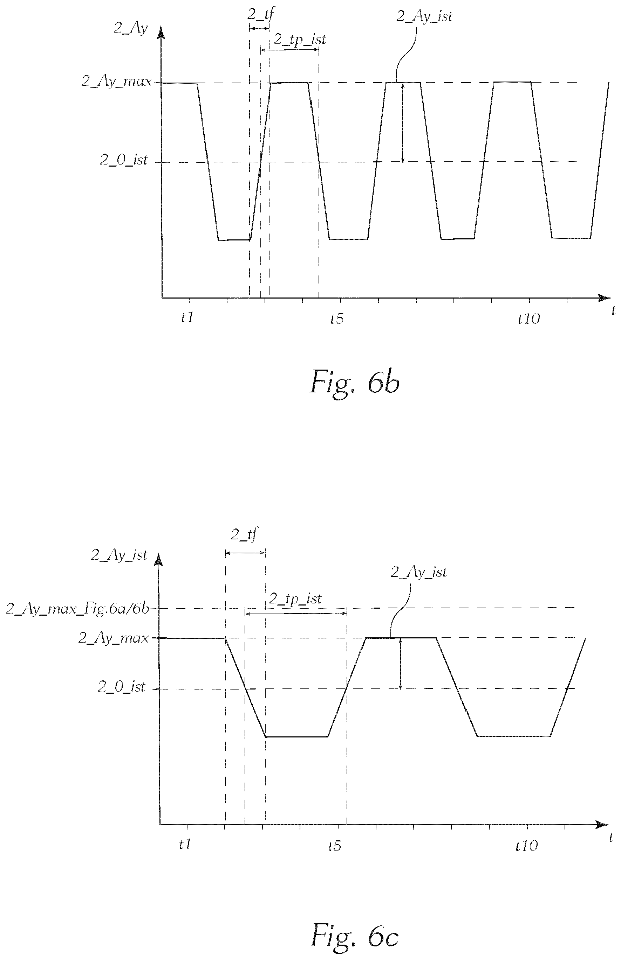

Figur 6a zeigt eine Darstellung eines ersten zeitlichen Verlaufes von Auslenkungen einer Ablenkeinheit 2. Genauer gesagt ist darin (sowie in den Figuren 6b und 6c) der zeitliche Verlauf der Auslenkung 2_Ay_ist im Zuge einer Drehung der Glasplatte 2a um die y-Achse zu sehen. All das für die Auslenkung um die y-Achse Gesagte kann natürlich in analoger Weise im Falle einer alleinigen oder zusätzlichen Auslenkung um die z-Achse erfolgen.

Die Drehung kann z.B. wenige zehntel Grad bis wenige Grad betragen. Die Auslenkung bzw. die Amplitude der Auslenkung kann dabei z.B. einen Maximalwert 2_Ay_max annehmen, wie dies in Fig. 6a und 6b gezeigt ist. In Fig. 6c hingegen wird dieser der Maximalwert 2_Ay_max der Ablenkung reduziert, wie anhand eines Vergleichs mit dem ebenso in Fig. 6c dargestellten Wert 2_Ay_max_Fig.6a/6b erkennbar ist.

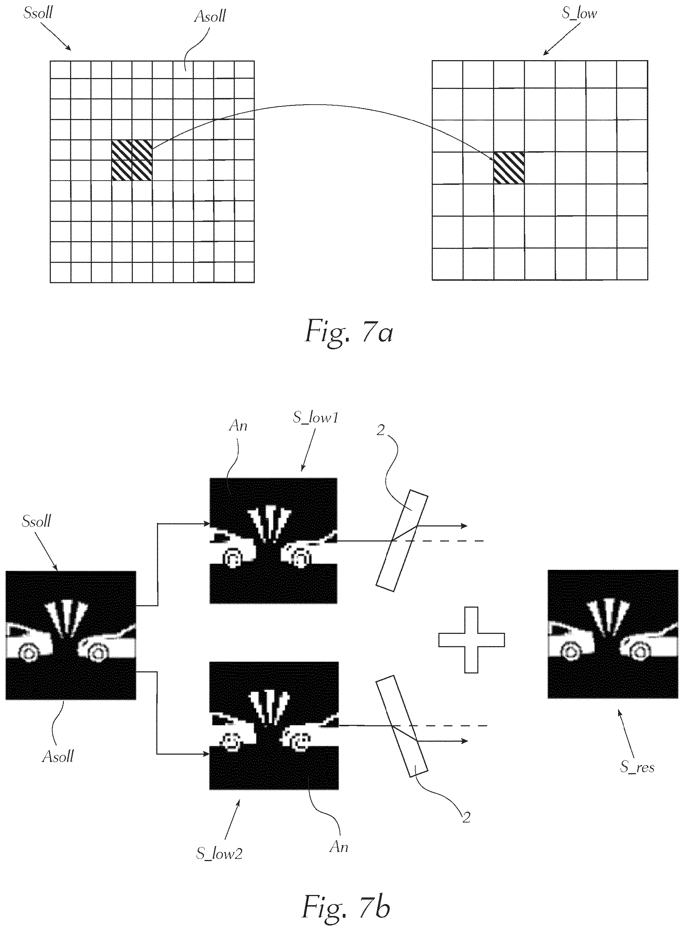

Fig. 6b zeigt eine Variante, in der eine Zeitdauer 2_tp_ist zwischen den Nulllagendurchgängen im Vergleich zu Fig. 6a gesenkt wurde. Konkret wurde dabei sowohl die Frequenz der Ablenkung als auch die Flankensteilheit zwischen den zu erreichenden Auslenkungspositionen 2_Ay_max bzw. -2Ay_max erhöht. Eine Flankenzeitdauer 2_tf wurde daher in Fig. 6b gegenüber Fig. 6a ebenso verkürzt. Die Abstrahlung von Licht durch die Lichtquellen 4 kann so getaktet werden, dass diese nur in der Zeitdauer zwischen den Flanken, also außerhalb von 2_tf erfolgt. Auf diese Weise kann z.B. die Schärfe der Abbildung weiter erhöht werden, da ein Verwischen der Abstrahlung vermieden wird.Figur 7a zeigt einen Ausschnitt einer Darstellung eines Sollbildes Ssoll sowie ein dazu errechnetes Bild mit niedrigerer Auflösung S_low. Anders als bei der vorliegenden Erfindung wird das Sollbild Ssoll in dem Beispiel nach Fig. 7a nur in ein niedrig aufgelöstes Bild aufgelöst S_low.

Figur 7b zeigt ein beispielhaftes Sollbild Ssoll, zwei dazu berechnete niedriger aufgelöster Bilder S_low1, S_low2 sowie die Überlagerung der beiden niedrig aufgelösten Bilder S_low1, S_low2 hin zu einem nacheinander abstrahlten Bildpaar S_res. Die Erfindung betrifft ein in Fig. 7b gezeigtes Verfahren zur auflösungsoptimierten Ansteuerung eines Kraftfahrzeugleuchtmoduls 1. Dabei ist das Kraftfahrzeugleuchtmodul 1 zur Abstrahlung einer segmentierten Lichtverteilung eingerichtet. Das Kraftfahrzeugleuchtmodul 1 umfasst eine Ablenkeinheit 2, mit der eine native Auflösung An des Kraftfahrzeugleuchtmoduls 1 durch zumindest zeitweise Strahlablenkung mittels der Ablenkeinheit 2 visuell erhöht werden kann. Das Verfahren umfasst die folgenden Schritte: a) Empfangen eines Bildsignals S1, wobei das Bildsignal S1 ein Sollbild Ssoll einer Lichtverteilung enthält, wobei das Sollbild Ssoll eine Auflösung Asoll aufweist, die die native Auflösung An des Kraftfahrzeugleuchtmoduls 1 überschreitet, b) Umwandeln des gemäß Schritt a) empfangenen Sollbildes Ssoll in zwei niedriger aufgelöste Bilder S_low1, S_low2, die gemeinsam ein Bildpaar S_res bilden, wobei die niedriger aufgelösten Bilder S_low1, S_low2 dergestalt gewählt sind, dass diese jeweils die native Auflösung An des Kraftfahrzeugleuchtmoduls 1 aufweisen, wobei die niedriger aufgelösten Bilder S_low1, S_low2 zudem dergestalt aufeinander abgestimmt sind, dass zumindest eines der zwei niedriger aufgelösten Bilder S_low1, S_low2 mittels der Ablenkeinheit 2 abgelenkt ist, sodass die Überlagerung der beiden niedriger aufgelösten Bilder S_low1, S_low2 einen zu dem Sollbild Ssoll ähnlicheren Bildeindruck ergibt, als die Abbildung der beiden niedrig aufgelösten Bilder S_low1, S_low2 für sich genommen, c) Ansteuerung des Kraftfahrzeugleuchtmoduls, wobei die Ansteuerung dergestalt erfolgt, dass die beiden niedrig aufgelösten Bilder S_low1, S_low2 des Bildpaars S_res zeitlich nacheinander durch das Kraftfahrzeugleuchtmodul 1 abgestrahlt werden.

In Fig 7b ist dabei zu erkennen, dass nicht nur das Aussehen der niedrig aufgelösten Bilder S_low1, S_low2 Einfluss auf das Aussehen des durch Überlappung dieser Bilder dargestellten Bildpaares S_res hat, sondern dass auch das Ausmaß der Ablenkung der beiden niedrig aufgelösten Bilder S_low1, S_low2 zueinander Einfluss auf das Aussehen des Bildpaares S_res hat. Günstigerweise können daher bei der Berechnung die niedrig aufgelösten Bilder S_low1, S_low2 die Freiheitsgrade berücksichtig werden, die durch vertikale und/oder horizontale Verschiebung der niedrig aufgelösten Bilder S_low1, S_low2 zueinander gewonnen werden. Das bedeutet, dass die niedrig aufgelösten Bilder S_low1, S_low2 so berechnet werden können, dass diese bei einer bestimmten Verschiebung zueinander gemeinsam einen idealen Bildeindruck ergeben.

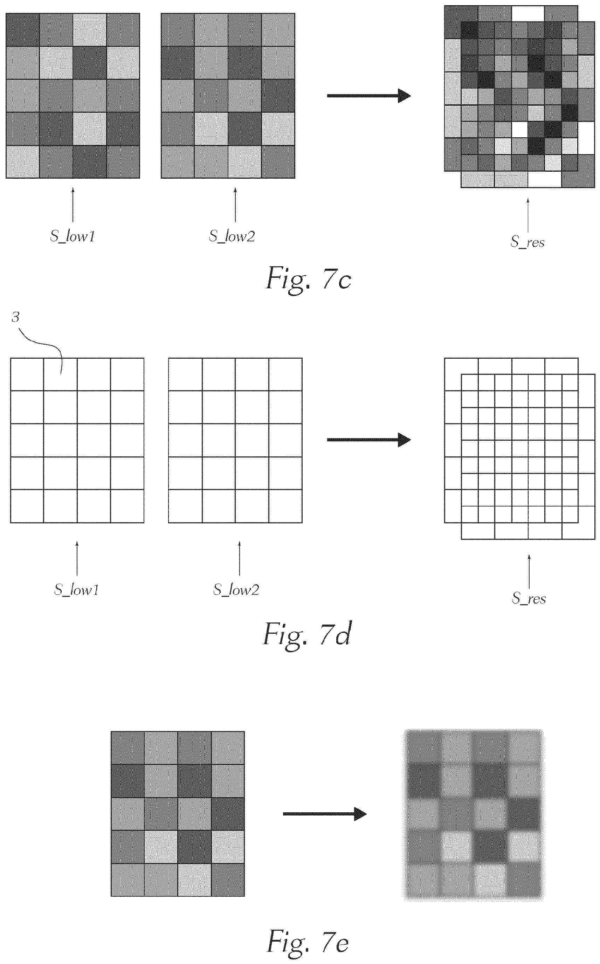

Figur 7c zeigt ein weiteres Beispiel einer Überlagerung zwei niedrig aufgelöster Bilder S_low1 und S_low2, wobei die niedrig aufgelösten Bilder Leuchtpixel 3 aufweisen, die in einer Matrix mit einer Auflösung von 4x5 angeordnet sind.

Figur 7d zeigt ein weiteres Beispiel einer Überlagerung zweier niedrig aufgelöster Bilder S_low1, S_low2 umfassend Grauflächen. Das Bildpaar S_res wirkt dabei so, als läge eine deutlich höhere native Auflösung als bei den niedrig aufgelösten Bildern S_low1, S_low2 vor.

Figur 7e zeigt eine beispielhafte Anwendung eines Gaussian-Blur-Filters. Dabei ist das linke ungefilterte Bild scharf dargestellt und das rechts davon dargestellte durch die Gauss-Blur-Filterfunktion bearbeitete Bild deutlich verschwommen bzw. weichgezeichnet.

Zurück mit Blick zu den vorgenannten Figuren 1a bis 6c sei erwähnt, dass vor oder während dem Schritt b) des erfindungsgemäßen Verfahrens die folgenden zusätzlichen Teilschritte vorgenommen werden können: I) Empfangen eines Sollbetriebssignals 2_ss, wobei das Sollbetriebssignal 2_ss Informationen zu zumindest einem der folgenden Kriterien enthält: Sollbildschärfe; Sollenergieeffizienz; Solltemperatur; Sollreinheit; Offset_Korrektur; II) Berechnung daraus ableitbarer Steuerparameter zur Beeinflussung einer zur Steuerung der Ablenkeinheit 2 vorgesehenen Steuergröße 2_s. Insbesondere kann vorgesehen sein, dass nach Teilschritt II ein Teilschritt III folgt, der eine Anwendung einer Bildbearbeitungsfunktion auf das gesamte Lichtbild vorsieht.

Weiters kann vorgesehen sein, dass zum Erreichen einer aus dem Sollbetriebssignal 2_ss gemäß Schritt a) abgeleiteten Sollenergieeffizienz Esoll die Zeitdauer 2_tp_ist zwischen den Nulldurchgängen manipuliert wird, und zwar so, dass in jenem Fall, in dem eine Istenergieeffizienz Eist der Ablenkeinheit 2 die Sollenergieeffizienz Esoll unterschreitet, die Zeitdauer zwischen den Nulllagendurchgängen 2_tp_ist erhöht wird.

Insbesondere kann vorgesehen sein, dass die Sollenergieeffizienz Esoll dergestalt vorgegeben wird, dass diese in Abhängigkeit von einer erfassten Fahrgeschwindigkeit Vist eines das Kraftfahrzeugleuchtmodul 1 mitsamt der Ablenkeinheit 2 umfassenden Fahrzeugs bestimmt wird, und zwar so, dass mit abnehmender Fahrgeschwindigkeit die geforderte Sollenergieeffizienz zunimmt. Zum Erreichen einer aus dem Sollbetriebssignal 2_ss gemäß Schritt a) abgeleiteten Solltemperatur Tsoll kann vorgesehen sein, dass die Zeitdauer 2_tp_ist zwischen den Nulldurchgängen manipuliert wird, und zwar so, dass in jenem Fall, in dem eine Isttemperatur Tist der Ablenkeinheit 2 oder des Kraftfahrzeugleuchtmoduls 1 eine Solltemperatur Tsoll überschreitet, die Zeitdauer 2_tp_ist zwischen den Nulllagendurchgängen erhöht wird.

Zum Erreichen einer aus dem Sollbetriebssignal 2_ss gemäß Schritt a) abgeleiteten Sollbildschärfe Csoll kann vorgesehen sein, dass die Amplitude 2_A_ist der Ablenkung manipuliert wird, und zwar so, dass bei Vorgabe maximaler Schärfe eine maximale Amplitude 2_Ay_max, 2_Az_max vorgegeben wird, und mit abnehmender Sollbildschärfe die Amplitude 2_A_ist reduziert wird.

Zum Erreichen einer aus dem Sollbetriebssignal 2_ss gemäß Schritt a) abgeleiteten Sollbildauflösung Rsoll kann vorgesehen sein, dass die Amplitude 2_A_ist der Ablenkung manipuliert wird, und zwar so, dass bei Vorgabe maximaler Sollbildauflösung eine maximale Amplitude 2_Ay_max, 2_Az_max vorgegeben wird, und mit abnehmender Sollbildauflösung die Amplitude 2_A_ist reduziert wird.

Weiters kann vorgesehen sein, dass zum Erreichen einer aus dem Sollbetriebssignal 2_ss gemäß Schritt a abgeleiteten Sollenergieeffizienz Esoll die Amplitude 2_A_ist der Ablenkung manipuliert wird, und zwar so, dass in jenem Fall, in dem eine Istenergieeffizienz Eist der Ablenkeinheit 2 die Sollenergieeffizienz unterschreitet, die Amplitude 2_A_ist der Ablenkung reduziert wird.

Insbesondere kann vorgesehen sein, dass zum Erzielen einer aus dem Sollbetriebssignal 2_ss gemäß Schritt a abgeleiteten Offset-Korrektur die Nulllage 2_0_ist der Ablenkung manipuliert wird.

Weiters kann vorgesehen sein, dass zum Erreichen einer aus dem Sollbetriebssignal 2_ss gemäß Schritt a abgeleiteten Sollbildschärfe Csoll die zeitliche Änderungsrate 2_dt_ist (siehe Fig. 6a) die Ablenkung manipuliert wird, und zwar so, dass in jenem Fall, in dem eine Istbildschärfe Cist der Ablenkeinheit 2 die Sollbildschärfe Csoll unterschreitet, die zeitliche Änderungsrate 2_dt_ist der Ablenkung erhöht wird. Von dieser Erhöhung der zeitlichen Änderungsrate kann z.B. ausschließlich die Zeitdauer der Flanken 2_tf vorgesehen sein. So können z.B. durch steilere Flanke die Endpositionen 2_Ay_max bei gleichbleibender Frequenz länger gehalten. Die Umsetzung steilerer Flanken geht in der Regel mit höheren elektromechanischen Anforderungen bzw. Belastungen an die Ablenkeinheit 2 einher. Anders ausgedrückt, bedeutet dieser Aspekt daher nicht zwingend eine Frequenzerhöhung, sondern es können einfach steilere Flanken zwischen zwei Endpositionen vorgesehen sein. Je schneller die Aktuatorbewegung hin zu den gewünschten Positionen durchgeführt wird, umso schärfer wird das Bild, je langsamer die gewünschte Position erreicht wird, umso mehr werden die Übergänge zwischen dem ersten Frame und dem zweiten Frame miteinander "vermischt".

Weiters kann vorgesehen sein, dass in dem Teilschritt II zudem in Abhängigkeit von dem Sollbetriebssignal 2_ss eine optimale Ablenkung der beiden niedrig aufgelösten Bilder S_low1, S_low2 des Bildpaares S_res zueinander berechnet wird.

Insbesondere kann vorgesehen sein, dass das Kraftfahrzeugleuchtmodul 1 zur Abstrahlung voneinander unterschiedlicher Lichtbilder mit einer Frequenz von zumindest 60 Hz, typischerweise zwischen 60 Hz und 160 Hz eingerichtet ist, sodass unterschiedliche Sollbilder Ssoll mit einer Frequenz von zumindest 30 Hz eingehen und in einzelne niedrig aufgelöste Bilder S_low1, S_low2 des jeweiligen Bildpaares S_res mit einer Frequenz von zumindest 60 Hz umgewandelt und durch das Kraftfahrzeugleuchtmodul 1 nacheinander abgestrahlt werden.

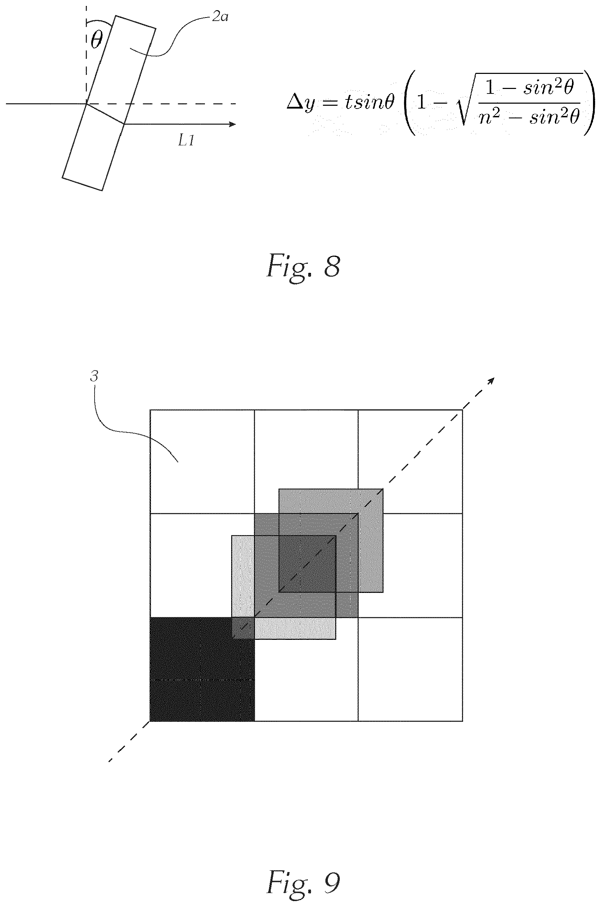

Figur 8 zeigt eine beispielhafte Ablenkung eines Lichstrahles L1 mittels einer Glasplatte 2a sowie eine zugehörige Formel zur Berechnung des Ausmaßes der Ablenkung.

Figur 9 zeigt eine Möglichkeit zur Anpassung der Helligkeit einzelner Lichtpixel. Darin ist zu erkennen, dass die resultierenden Leuchtpixel des überlagerten Lichtbildes bei Überlappung entsprechend dünkler oder heller werden. Im Hintergrund ist ein nicht abgelenktes Lichtbild zu sehen. Darüber sind mittig zwei abgelenkte Leuchtpixel zu sehen. In den Bereichen, in denen sich Leuchtpixel überlappen, wird die Intensität durch die Intensitätswerte der überlappenden Pixel bestimmt. Die Intensität der einzelnen Leuchtelemente der Lichtquelle wird durch Ansteuerung der Lichtquelle bestimmt. Je mehr Strom in die Lichtquelle gespeist wird, umso heller leuchtet das einzelne Leuchtelement.

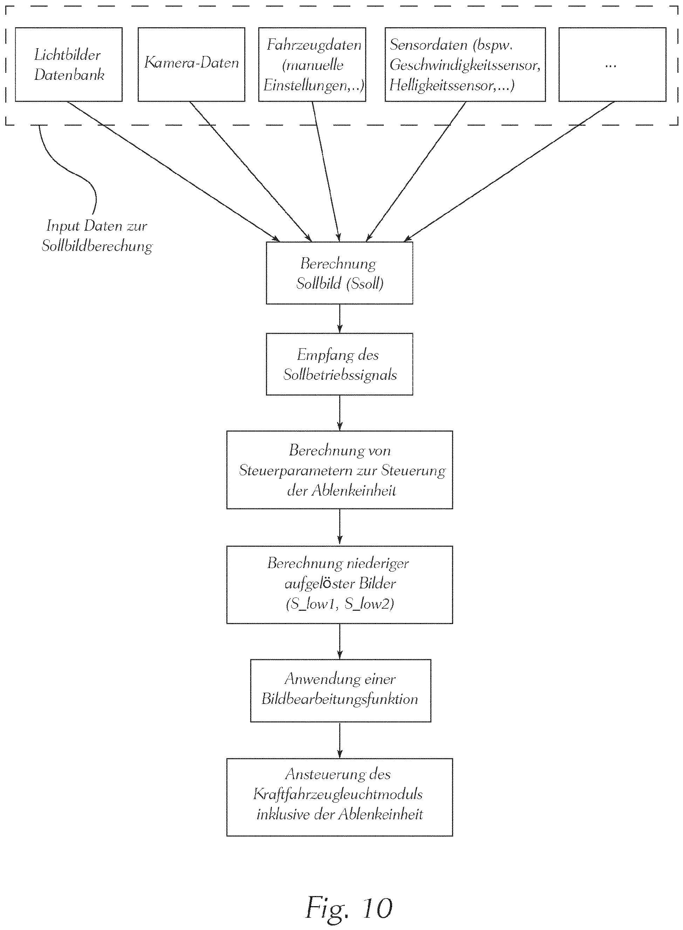

Fig. 10 zeigt ein beispielhaftes Ablaufdiagramm zu dem erfindungsgemäßen Verfahren.

Die Erfindung betrifft weiters ein Kraftfahrzeugleuchtmodul 1, wobei das Kraftfahrzeugleuchtmodul 1 zur Abstrahlung einer segmentierten Lichtverteilung eingerichtet ist, wobei das Kraftfahrzeugleuchtmodul 1 eine Ablenkeinheit 2 umfasst, mit der eine native Auflösung des Kraftfahrzeugleuchtmoduls 1 durch zumindest zeitweise Strahlablenkung mittels der Ablenkeinheit 2 visuell erhöht werden kann, wobei das Kraftfahrzeugleuchtmodul 1 zur Umsetzung des erfindungsgemäßen Verfahrens eingerichtet ist. Natürlich kann das Kraftfahrzeugleuchtmodul 1 Komponenten wie z.B. die genannte Steuereinheit 7, die Lichtquelle 4, das optische Bauelement 6, etwaige Projektionsoptiken etc. umfassen.

Die Erfindung ist nicht auf die gezeigten Ausführungsformen beschränkt, sondern durch den gesamten Schutzumfang der Ansprüche definiert. Auch können einzelne Aspekte der Erfindung bzw. der Ausführungsformen aufgegriffen und miteinander kombiniert werden. Etwaige Bezugszeichen in den Ansprüchen sind beispielhaft und dienen nur der einfacheren Lesbarkeit der Ansprüche, ohne diese einzuschränken.

## Patentansprüche

1. Verfahren zur auflösungsoptimierten Ansteuerung eines Kraftfahrzeugleuchtmoduls (1), wobei das Kraftfahrzeugleuchtmodul (1) zur Abstrahlung einer segmentierten Lichtverteilung eingerichtet ist, wobei das Kraftfahrzeugleuchtmodul (1) eine Ablenkeinheit (2) umfasst, mit der eine native Auflösung (An) des Kraftfahrzeugleuchtmoduls (1) durch zumindest zeitweise Strahlablenkung mittels der Ablenkeinheit (2) visuell erhöht werden kann, wobei das Verfahren die folgenden Schritte umfasst:
a) Empfangen eines Bildsignals (S1), wobei das Bildsignal (S1) ein Sollbild (Ssoll) einer Lichtverteilung enthält, wobei das Sollbild (Ssoll) eine Auflösung (Asoll) aufweist, die die native Auflösung (An) des Kraftfahrzeugleuchtmoduls (1) überschreitet,
b) Umwandeln des gemäß Schritt a) empfangenen Sollbildes (Ssoll) in zwei niedriger aufgelöste Bilder (S_low1, S_low2), die gemeinsam ein Bildpaar (S_res) bilden, wobei die niedriger aufgelösten Bilder (S_low1, S_low2) dergestalt gewählt sind, dass diese jeweils die native Auflösung (An) des Kraftfahrzeugleuchtmoduls (1) aufweisen, wobei die niedriger aufgelösten Bilder (S_low1, S_low2) zudem dergestalt aufeinander abgestimmt sind, dass zumindest eines der zwei niedriger aufgelösten Bilder (S_low1, S_low2) mittels der Ablenkeinheit (2) abgelenkt ist, sodass die Überlagerung der beiden niedriger aufgelösten Bilder (S_low1, S_low2) einen zu dem Sollbild (Ssoll) ähnlicheren Bildeindruck ergibt, als die Abbildung der beiden niedrig aufgelösten Bilder für sich genommen,
c) Ansteuerung des Kraftfahrzeugleuchtmoduls, wobei die Ansteuerung dergestalt erfolgt, dass die beiden niedrig aufgelösten Bilder (S_low1, S_low2) des Bildpaars (S_res) zeitlich nacheinander durch das Kraftfahrzeugleuchtmodul (1) abgestrahlt werden.

2. Verfahren nach Anspruch 1, wobei das Kraftfahrzeugleuchtmodul (1) einzeln ansteuerbare Leuchtpixel (3) aufweist, wobei die Segmentierung der Lichtverteilung durch die einzeln ansteuerbaren Leuchtpixel (3) realisiert ist, die in einer Matrix mit einer Auflösung von zumindest zwei Zeilen und zwei Spalten weitgehend lückenlos nebeneinander angeordnet sind, wobei vorzugsweise vorgesehen ist, dass -eine maximale durchgeführte Ablenkung durch die Ablenkeinheit (2) so konzipiert ist, dass im Vergleich zu einem nicht abgelenkten Referenzzustand (P0) der abgelenkte Zustand (P1) einen vertikalen sowie einen horizontalen Versatz um eine halbe Pixelbreite aufweist, sodass bei Vorliegen der maximalen Amplitude der Ablenkung - abgesehen von Randpixeln - jedes abgelenkte Leuchtpixel (3) mit vier nichtabgelenkten Leuchtpixeln räumlich zu je 25% überlappt.

3. Verfahren nach einem der vorhergehenden Ansprüche, wobei die Ablenkeinheit (2) eine neutrale Stellung (Pn) aufweist, in der die Ablenkeinheit (2) im Falle eines Ausfalles einer Stromversorgung der Ablenkeinheit (2) oder einer zur Steuerung der Ablenkeinheit (2) vorgesehenen Steuergröße (2_s) automatisch einnimmt, wobei vorzugsweise ein Algorithmus zur Überprüfung der korrekten Berechnung und Ausgabe der Steuergröße (2_s) vorgesehen ist, wobei im Falle des Feststellens eines Fehlbetriebs die Ablenkeinheit (2) in die neutrale Stellung (Pn) gelenkt wird.

4. Verfahren nach einem der vorhergehenden Ansprüche, wobei vor oder während dem Schritt b) die folgenden zusätzlichen Teilschritte vorgenommen werden:
I) Empfangen eines Sollbetriebssignals (2_ss), wobei das Sollbetriebssignal (2_ss) Informationen zu zumindest einem der folgenden Kriterien enthält: Sollenergieeffizienz (Esoll); Solltemperatur (Tsoll); Sollbildschärfe (Csoll); Sollreinheit (Msoll); Offset-Korrektur (Osoll);;
II) Berechnung daraus ableitbarer Steuerparameter zur Beeinflussung einer zur Steuerung der Ablenkeinheit (2) vorgesehenen Steuergröße (2_s).

5. Verfahren nach Anspruch 4, wobei nach Teilschritt II) ein Teilschritt III) folgt: Anwendung einer Bildbearbeitungsfunktion auf das Sollbild (Ssoll) und/oder auf eines oder beide niedriger aufgelöste Bilder (S_low1, S_low2).

6. Verfahren nach Anspruch 4 oder 5, wobei zum Erreichen einer aus dem Sollbetriebssignal (2_ss) gemäß Schritt a) abgeleiteten Sollenergieeffizienz (Esoll) die Zeitdauer (2_tp_ist) zwischen den Nulldurchgängen manipuliert wird, und zwar so, dass in jenem Fall, in dem eine Istenergieeffizienz (Eist) der Ablenkeinheit (2) die Sollenergieeffizienz (Esoll) unterschreitet, die Zeitdauer zwischen den Nulllagendurchgängen (2_tp_ist) erhöht wird.

7. Verfahren nach einem der Ansprüche 4 bis 6, wobei die Sollenergieeffizienz (Esoll) dergestalt vorgegeben wird, dass diese in Abhängigkeit von einer erfassten Fahrgeschwindigkeit (Vist) eines das Kraftfahrzeugleuchtmodul (1) mitsamt der Ablenkeinheit (2) umfassenden Fahrzeugs bestimmt wird, und zwar so, dass mit abnehmender Fahrgeschwindigkeit die geforderte Sollenergieeffizienz zunimmt.

8. Verfahren nach einem der Ansprüche 4 bis 7, wobei zum Erreichen einer aus dem Sollbetriebssignal (2_ss) gemäß Schritt a) abgeleiteten Solltemperatur (Tsoll) die Zeitdauer (2_tp) zwischen den Nulldurchgängen manipuliert wird, und zwar so, dass in jenem Fall, in dem eine Isttemperatur (Tist) der Ablenkeinheit (2) oder des Kraftfahrzeugleuchtmoduls (1) eine Solltemperatur (Tsoll) überschreitet, die Zeitdauer (2_tp_ist) zwischen den Nulllagendurchgängen erhöht wird.

9. Verfahren nach einem der Ansprüche 4 bis 8, wobei zum Erreichen einer aus dem Sollbetriebssignal (2_ss) gemäß Schritt a) abgeleiteten Sollbildschärfe (Csoll) die Amplitude (2_A_ist) der Ablenkung manipuliert wird, und zwar so, dass bei Vorgabe maximaler Schärfe eine maximale Amplitude (2_Ay_max, 2_Az_max) vorgegeben wird, und mit abnehmender Sollbildschärfe die Amplitude (2_A_ist) reduziert wird.

10. Verfahren nach einem der Ansprüche 4 bis 9, wobei zum Erreichen einer aus dem Sollbetriebssignal (2_ss) gemäß Schritt a) abgeleiteten Sollbildschärfe (Csoll) die Amplitude (2_A_ist) der Ablenkung manipuliert wird, und zwar so, dass bei Vorgabe maximaler Sollbildschärfe eine maximale Amplitude (2_A_max) vorgegeben wird, und mit abnehmender Sollbildschärfe die Amplitude (2_A_ist) reduziert wird und/oder die zeitliche Änderungsrate (2_dt ist) der Ablenkung manipuliert wird, und zwar so, dass in jenem Fall, in dem eine Istbildschärfe (Cist) der Ablenkeinheit (2) die Sollbildschärfe (Csoll) unterschreitet, die zeitliche Änderungsrate (2_dt_ist) der Ablenkung erhöht wird.

11. Verfahren nach einem der vorhergehenden Ansprüche, wobei zum Erreichen einer aus dem Sollbetriebssignal (2_ss) gemäß Schritt a) abgeleiteten Sollreinheit (M_soll) der Ablenkeinheit (2) die zeitliche Änderungsrate (2_dt) der Ablenkung manipuliert wird, und zwar so, dass bei Unterschreiten einer Sollreinheit (M_soll) die zeitliche Änderungsrate (2_dt) der Ablenkung zumindest vorübergehend erhöht wird.

12. Verfahren nach einem der Ansprüche 4 bis 11, wobei in dem Teilschritt II) zudem in Abhängigkeit von dem Sollbetriebssignal (2_ss) eine optimale Ablenkung der beiden niedrig aufgelösten Bilder (S_low1, S_low2) des Bildpaares (S_res) zueinander berechnet wird.

13. Verfahren nach einem der vorhergehenden Ansprüche, wobei das Kraftfahrzeugleuchtmodul (1) zur Abstrahlung voneinander unterschiedlicher Lichtbilder mit einer Frequenz von zumindest 60 Hz, typischerweise zwischen 60 Hz und 160 Hz eingerichtet ist, sodass unterschiedliche Sollbilder (Ssoll) mit einer Frequenz von zumindest 30 Hz eingehen und in einzelne niedrig aufgelöste Bilder (S_low1, S_low2) des jeweiligen Bildpaares (S_res) mit einer Frequenz von zumindest 60 Hz umgewandelt und durch das Kraftfahrzeugleuchtmodul (1) nacheinander abgestrahlt werden.

14. Verfahren nach einem der vorhergehenden Ansprüche, wobei die Ablenkeinheit (2) eine Glasplatte (2a) umfasst, die um zumindest eine, vorzugsweise genau eine Achse (y) oder genau zwei Achse (y,z) verschwenkbar oder verschiebbar ausgebildet ist, wobei vorzugsweise die Glasplatte (2a) eine plane Lichteintrittsfläche (2a') und eine hierzu planparallele Lichtaustrittsfläche (2a") aufweist, wobei die Ablenkeinheit (2) je Achse, um die die Glasplatte (2a) verschwenkbar ist, zumindest eine elektrische Spule (2b) aufweist, wobei auf der Glasplatte (2a) für jede Spule (2b) je ein Mittel (2c) zur magnetischen Kopplung mit der jeweiligen Spule (2b) angeordnet ist, sodass durch Bestromung der jeweiligen Spule (2b) eine Kraft auf das zugehörige Mittel (2c) ausübbar ist, und zwar so, dass die Glasplatte (2a) in Abhängigkeit von der Bestromung der Spule (2b) um die jeweilige Achse (y,z) geschwenkt wird, wobei vorzugsweise zudem die Ablenkeinheit (2) je Achse (y,z), um die die Glasplatte (2a) verschwenkbar ist, ein mechanisches Rückstellelement (), insbesondere ein Federelement (), zur Rückstellung der Glasplatte (2a) in eine neutrale Stellung (Pn) aufweist, die die Glasplatte (2a) im Falle eines Ausfalles einer Stromversorgung der Ablenkeinheit (2) oder einer zur Steuerung der Ablenkeinheit (2) vorgesehenen Steuergröße (2_s) automatisch einnimmt.

15. Kraftfahrzeugleuchtmodul (1), wobei das Kraftfahrzeugleuchtmodul (1) zur Abstrahlung einer segmentierten Lichtverteilung eingerichtet ist, wobei das Kraftfahrzeugleuchtmodul (1) eine Ablenkeinheit (2) umfasst, mit der eine visuell wahrnehmbare Auflösung der vom Kraftfahrzeugleuchtmodul (1) erzeugten Lichtverteilung gegenüber der native Auflösung (An) des Kraftfahrzeugleuchtmoduls (1) erhöht werden kann, wobei das Kraftfahrzeugleuchtmodul (1) zur Umsetzung des Verfahrens nach einem der vorhergehenden Ansprüche eingerichtet ist.
